(19) **Europäisches Patentamt**

**European Patent Office**

**Office européen des brevets**

(11) **EP 1 554 832 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(51) Int Cl.:
*H04J 14/02* (2006.01)

(21) Anmeldenummer: **03773523.0**

(86) Internationale Anmeldenummer:
**PCT/DE2003/003408**

(22) Anmeldetag: **14.10.2003**

(87) Internationale Veröffentlichungsnummer:
**WO 2004/036801 (29.04.2004 Gazette 2004/18)**

(54) **OPTISCHEN ADD/DROP-MULTIPLEXER UND RINGSTRUKTUR ZUR DATENÜBERTRAGUNG MITTELS EINES OPTISCHEN WELLENLÄNGENMULTIPLEXE-SYSTEMS**

OPTICAL ADD/DROP MULTIPLEXER AND RING STRUCTURE FOR TRANSMITTING DATA BY MEANS OF AN OPTICAL WAVELENGTH MULTIPLEX SYSTEM

MULTIPLEXEUR OPTIQUE A INSERTION-EXTRACTION ET STRUCTURE ANNULAIRE POUR TRANSMISSION DE DONNEES A L'AIDE D'UN SYSTEME OPTIQUE MULTIPLEX A REPARTITION EN LONGUEUR D'ONDES

(84) Benannte Vertragsstaaten:
**AT BE BG CH CY CZ DE DK EE ES FI FR GB GR HU IE IT LI LU MC NL PT RO SE SI SK TR**

(30) Priorität: **15.10.2002 DE 10248059**
**15.10.2002 DE 20215841 U**

(43) Veröffentlichungstag der Anmeldung:
**20.07.2005 Patentblatt 2005/29**

(73) Patentinhaber: **Adva AG Optical Networking**
**82152 Martinsried (DE)**

(72) Erfinder: **HINDERTHÜR, Henning**
**81247 München (DE)**

(74) Vertreter: **Eder, Thomas**
**Eder & Schieschke,**
**Patentanwälte,**
**Elisabethstrasse 34**
**80796 München (DE)**

(56) Entgegenhaltungen:
**EP-A- 0 905 936        WO-A-01/67650**
**WO-A-02/11489        US-A1- 2002 081 064**
**US-B1- 6 433 903**

- **NOIRIE L ET AL: "Impact of intermediate traffic grouping on the dimensioning of multi-granularity optical networks" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA: OSA, US, Bd. 1 OF 4, 17. März 2001 (2001-03-17), Seiten TuG3-1-TuG3-3, XP010545754 ISBN: 1-55752-655-9**

EP 1 554 832 B1

**Beschreibung**

Die Erfindung betrifft einen optischen Add/Drop-Multiplexer zur Realisierung eines optischen Wellenlängen-multiplex-Kommunikationsringnetzes sowie eine Ringstruktur unter Verwendung eines derartigen optischen Add/Drop-Multiplexers.

Die Übertragungsbandbreite moderner Telekommunikationsnetze wächst heute dramatisch an. Service Provider bieten Daten- und Sprachdienste für immer mehr Kunden auf Basis der selben - typischerweise punkt-zu-punkt- oder ringförmigen - Netzinfrastruktur an. Mit steigender Anzahl von Teilnehmern und steigender Netzauslastung wächst auch die Anforderung an die Sicherheit des Netzes. Speziell innerhalb des dicht besiedelten Stadtbereichs ist die Ausfallwahrscheinlichkeit für Glasfaserrouten sehr hoch. Während Fehler in Übertragungsgeräten vergleichsweise schnell behoben werden können, liegen die Ausfallzeiten von Glasfaserkabeln oft im Bereich von mehreren Tagen.

Die SDH Technik bietet als zur Zeit etablierte Standard-Übertragungstechnik aller überregionalen Service Provider bestimmte Protektionsmechanismen, die in der Lage sind, einzelne SDH Services auf alternative Wege umzuschalten. Generell ist die Übertragungskapazität der SDH Technik durch die heute realisierbaren Datenraten limitiert. Dazu kommt, dass von Kunden zunehmend Datendienste auf Basis SDH-fremder Applikationen nachgefragt werden. DWDM Technik bietet hier eine Lösungsperspektive.

In einem DWDM Netz werden durch optisches Multiplexen von Wellenlängen virtuelle Übertragungskanäle erzeugt. Jeder dieser Wellenlängenkanäle kann einen oder mehrere SDH Dienste aber auch andere Applikationen wie zum Beispiel IP, Video oder SAN Applikationen übertragen. Ein DWDM-basiertes Netz zeichnet sich damit im Vergleich zu einem reinen SDH Netz durch erhöhte Kapazität und Applikations-Transparenz aus. Da ein DWDM Netz in der Regel nicht auf die Protektionsmechanismen der SDH Technik zugreifen kann, ist es notwendig, zusammen mit der DWDM Technik auch neue Protektionsmechanismen einzuführen.

Da DWDM Technik heute auf der protokoll-transparenten Übertragung durch sogenannte Transponder- oder Kanalkarten basiert, stehen für DWDM Protektionsmechanismen prinzipiell ausschließlich Umschaltkriterien zur Verfügung, die Parameter des optischen Layers benutzen. Typische Schaltkriterien sind *"Loss Of Light"* (LOL) bzw. *"Loss Of Clock"* (LOC). D.h., Lichtpegel bzw. Lichtmodulation an einem zu definierenden Port des Systems sind verschwunden. Als Folge wird der Datenverkehr, der zu diesem Port korrespondiert, auf einen Ersatzweg umgeschaltet.

Jedes Protection-Konzept muss grundsätzlich drei wichtige Kriterien erfüllen, um erfolgreich eingesetzt werden zu können:

• Um Sprachdienste mit ausreichender Qualität übertragen zu können, müssen Schaltzeiten im Störfall ausreichend klein sein, beispielsweise kleiner als 50ms. Standard-Betriebssysteme können derart schnelle Signalverarbeitung nicht gewährleisten und scheiden daher für eine Steuerung der Protection-Schaltung aus.

• Es muss zu jeder Zeit gewährleistet sein, dass die "Protection" Trasse zur Übertragung bereit ist. Außerdem muss nach erfolgter Protection Schaltung detektierbar sein, wann die "Working" Trasse wieder hergestellt ist. Diese Randbedingung erfordert eine permanente Beleuchtung beider Trassen entweder mit Nutzsignalen oder mit einem Pilotsignal.

• Aus Sicherheitsgründen muss die aus einem offenen Port emittierbare Leistung beschränkt werden. In der Praxis soll in der Regel die Laserklasse 1 erfüllt werden. Die maximal zulässige Lichtleistung beträgt hierfür bei einer Wellenlänge von 1550 nm etwa 10mW. Ein DWDM System mit seinen zahlreichen Wellenlängen verarbeitet auf der Line Seite in der Regel höhere Lichtpegel. Um dennoch Laserklasse 1 zu wahren, muss gewährleistet sei, dass keine offenen Ports vorhanden sind. Auch eine verletzte Fasertrasse gilt als offener Port. Fällt eine Trasse aus, muss daher der Protection Mechanismus den Verkehr auf dieser Trasse aktiv ausschalten. Die Forderung nach Laserklasse 1 tauglichem Gerät verlangt also, dass der Protection Mechanismus aktiv in Senderichtung schaltet. Die Forderung nach Laserklasse 1 ist dabei nicht zwingend, vereinfacht aber den Betrieb des Systems erheblich.

Typischerweise werden in einem DWDM System Kanäle zu Gruppen zusammengefasst. Dem entsprechend gibt es in der Regel zwei Filterstufen: eine Gruppen- und eine Kanalfilterstufe. Eine Gruppe umfasst typischerweise vier oder acht Kanäle. Die Applikationen werden schließlich auf wellenlängenspezifischen Kanalkarten terminiert. Hier erfolgt eine optisch/elektrische bzw. elektisch/optische Konversion der Signale.

Folgende Protection-Verfahren sind heute für DWDM-Systeme am weitesten verbreitet:

Im Fall eines Punkt-zu-Punkt-Line-Protection-Systems ist lediglich die Faserinfrastruktur redundant ausgelegt. Ein optischer Schalter schaltet im Fall eines Faserfehlers auf den Ersatzweg um. Filter, Kanalkarten sowie der Schalter selbst sind ungeschützt. Dieses Verfahren zeichnet sich durch niedrige Gerätekosten aus. Ein Schutz der Faserinfrastruktur ist vor allem deshalb sinnvoll, weil hier die Reparaturzeiten typischerweise besonders lang sind. Die Forderung nach einem Laserklasse 1 - tauglichen Schema verlangt das Schalten in Senderichtung. Um gleichzeitig die Protection-Trasse überwachen zu können, ist ein zusätzlicher sogenannter Pilotlaser nötig, der den Datensignalen überlagert ist und permanent beide Trassen beleuchtet. Typische optische Schalter für Punkt-zu-Punkt-Line-Protection, die die drei oben genannten Forderungen erfüllen, arbeiten daher mit Pilotlasern.

Bei einem Punkt-zu-Punkt-Path-Protection-pro-Wellenlänge-System sind Faserinfrastruktur, Filter und Kanalkarten redundant. Die Ersatzschaltung erfolgt auf der Ebene einzelner Wellenlängenpfade durch Kommunikation zwischen zwei Kanalkarten. Da es keinen Schalter im Signalpfad gibt, gibt es auch keinen sog. "Single Point Of Failure". Das Verfahren gewährleistet extrem hohe Netzverfügbarkeiten bei sehr hohen Gerätekosten.

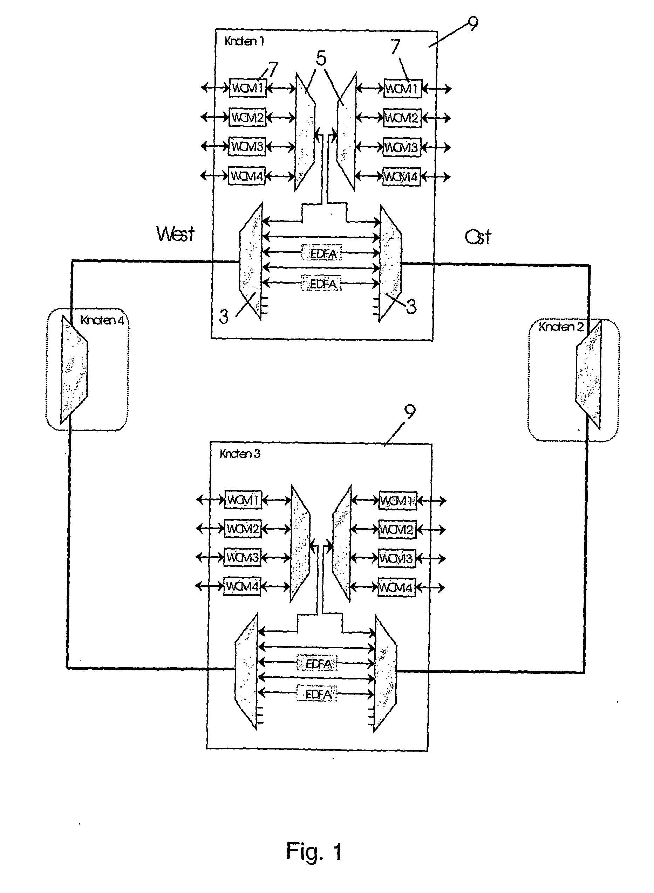

DWDM Ringnetze werden heute in der Regel als bi-direktionale Zweifaserringe (Optical Bidirectional Line Switched Ring - O-BLSR) mit Path Protection realisiert. Fig. 1 zeigt am Beispiel eines 4-Knoten Ringnetzes 1 die vollständig redundante Konfiguration des gesamten Pfades. Gruppenfilter 3, Kanalfilter 5 und Kanalkarten 7 sind in jedem Knoten für OST und WEST Richtung redundant konfiguriert. Im Störfall schalten die Kanalkarten auf die jeweils andere Richtung um.

Die durch die Add/Drop-Multiplexer 9 gebildeten Knoten des Ringnetzes 1 bieten "Pass Through" und "Add/Drop" Funktionalität für verschiedene Anteile des Verkehrsaufkommens. In der Regel werden den verschiedenen Verkehrsbeziehungen eines DWDM Rings bestimmte Wellenlängengruppen zugewiesen. Der Grund dafür liegt in den optischen Parametern: Hauptaufgabe der Filter eines DWDM Systems ist es, Wellenlängen möglichst scharf voneinander zu isolieren. Zwei benachbarte Wellenlängen erfahren in einem Kanalfilter eine bestimmte endliche Isolation. Die Isolation zwischen nicht benachbarten Wellenlängen ist höher. Besonders hoch ist die Isolation zwischen Wellenlängen, die zu unterschiedlichen Gruppen gehören. Alle Applikationen, die innerhalb eines Ringes die gleiche geometrische Verkehrsbeziehung durchlaufen (z.B. wie in Fig 1 von Knoten 1 nach Knoten 3), haben an allen Punkten des Pfades etwa gleiche optische Leistungswerte. Die Wellenlängen einer solchen Verkehrsbeziehung sind daher relativ leicht voneinander zu trennen. Im Gegensatz dazu können Wellenlängen, die zu unterschiedlichen Verkehrbeziehungen gehören aufgrund der ggf. sehr unterschiedlichen Leistungswerte schwer voneinander zu trennen sein und müssen stark voneinander isoliert werden. Es ist daher üblich, bei der Netzplanung eine Wellenlängengruppe für nur maximal eine Verkehrsbeziehung zu benutzen. Damit ist gewährleistet, dass Wellenlängen verschiedener Verkehrbeziehungen voneinander stark isoliert sind. In einem Knoten werden also ganze Gruppen terminiert oder weitergeleitet (Add/Drop oder Pass Through). Pass Through für eine Wellenlängengruppe kann entweder rein passiv erfolgen oder bei gleichzeitiger Verstärkung durch einen optischen Verstärker EDFA (Erbium doped Fiber Amplifier).

Der Protection Mechanismus der Path Protection passiert auf Ebene der Kanalkarten. Wenn eine Kanalkarte der WEST Seite LOS oder LOC detektiert, schaltet sie auf eine Ersatzkarte der OST Seite um. Das Umschalten erfolgt durch direkte Kommunikation zwischen zwei Karten ohne Umweg über ein Betriebssystem und ist daher schneller als die üblicherweise geforderten 50 ms. Verlust eines Line-seitigen Empfangssignals (LOS des Remote Rx) führt außerdem zum sofortigen Abschalten des Line-seitigen Senders (Remote Tx) und gewährleistet so Laserklasse 1. Solange kein LOS vorliegt, sind die Sender der Working und Protection Karte eingeschaltet, was eine permanente Überwachung beider Trassen darstellt.

Der Nachteil eines derartigen Systems liegt in den hohen Kosten für das redundante Vorsehen der Kanalfilter 5 und Kanalkarten 7.

EP-A-0 905 936 offenbart einen optischen Add/Drop-Multiplexer zur Realisierung einer Ringstruktur mit einer ersten (Westseite) und einer zweiten (Ostseite) optischen Gruppen-Wellenlängenmultiplexer/Demultiplexereinheit, welche jeweils ein ihr zugeführtes Wellenlängenmultiplexsignal in mehrere optische Gruppen-Multiplexsignale demultiplexen und mehrere ihr zugeführte optische Gruppen-Multiplexsignale zu einem abgehenden optischen Wellenmultiplexsignal multiplexen, wobei ein Teil der optischen Gruppen-Multiplexsignale den Gruppen-Multiplexsignalports der jeweils anderen Wellenlängenmultiplexer/- Demultiplexereinheit zugeführt sind und mit einer Steuereinheit. Bei der Vorrichtung diesem Dokument werden die gedemultiplexten Kanalsignale einem optischen "Cross-connect" zugeführt. Dieser "Cross-connect" ermöglicht das Dropen und Hinzufügen von individuellen Kanälen in dem betreffenden Knoten.

Ausgehend von diesem Stand der Technik liegt der Erfindung die Aufgabe zugrunde, einen optischen Add/Drop-Multiplexer zur Realisierung eines optischen Wellenlängenmultiplex-Kommunikationsringnetzes sowie eine Ringstruktur unter Verwendung eines derartigen optischen Add/Drop-Multiplexers zu schaffen, wobei mit möglichst geringem Aufwand eine ausreichende Betriebssicherheit für das Kommunikationsringnetz gewährleistet wird.

Die Erfindung löst diese Aufgabe mit den Merkmalen der Patentansprüche 1 bzw. 9.

Die Erfindung geht von der Erkenntnis aus, dass durch das Schalten von Gruppen von Wellenlängenkanälen (Ring Group Switching, RGS) auf dem optischen Layer gegenüber der vollen Path Protection eine drastische Reduzierung des Hardware-Aufwands erreicht wird. Es lässt sich zeigen, dass für übliche Ringnetze im Metro-Bereich auch mit einer derartigen Struktur eine ausreichende Netzverfügbarkeit erreichbar ist.

Das optische Konzept des Ring Group Switching (RGS) basiert auf einer Verlagerung des Schaltmechanismus hinter die erste DWDM Filterstufe. Die Schaltgranularität passt damit ideal mit der Architektur von typischen DWDM Ringen zusammen, da standardmäßig Verkehrsbeziehungen mit kompletten Gruppen assoziiert werden. Ein sogenannter Gruppenschalter (Group Switch, GS) leitet den Datenverkehr einer einzelnen Gruppe in die OST(WEST) Richtung. Im Fall des Verlustes der OST(WEST)-Trasse wird auf WEST(OST) Richtung umgeschaltet.

Vorzugsweise werden lediglich solche Gruppen eines Knotens geschaltet, die für Add/Drop vorgesehen sind. Alle Gruppen, die einen Knoten lediglich passieren (Pass Through), werden nicht geschaltet und weiterhin von OST (WEST) nach WEST(OST) verbunden. Während bei Path Protection im Fall des Verlustes einer Trasse sämtliche Kanäle individuell schalten, ist bei RGS nur ein Schaltvorgang pro Add/Drop-Multiplexer und Add/Drop Gruppen notwendig.

Nach der bevorzugten Ausführungsform der Erfindung weist der Add/Drop-Multiplexer wenigstens eine Transceivereinheit für einen Managementkanal (Optical Supervisory Channel, OSC) auf, welcher zur Übertragung von Managementinformationen innerhalb der Ringstruktur dient. Die Übertragung der Managementinformationen kann entweder unmittelbar zwischen den Add/Drop-Multiplexern erfolgen oder über eine Netzwerkmanagement-Steuereinheit. Damit können an jeden Add/Drop-Multiplexer die für das Bewirken der Schaltvorgänge mittels der wenigstens einen Gruppenschaltereinheit erforderlichen Informationen übermittelt werden. Dabei kann dem betreffenden Add/Drop-Multiplexer entweder direkt mitgeteilt werden, welcher Schaltvorgang auszuführen ist, oder lediglich die erforderliche Information über den Zustand der Übertragungswege, wobei die Steuereinheit des Add/Drop-Multiplexers die nötigen Schaltvorgänge selbst ermittelt und ausführt.

Nach einer Ausführungsform der Erfindung ist die Steuereinheit jedes Add/Drop-Multiplexers mittels des Managementkanals und Internet-Protokoll (IP) mit den Steuereinheiten aller anderen Add/Drop-Multiplexer und/oder der Netzwerkmanagement-Steuereinheit verbunden.

Nach der bevorzugten Ausführungsform trägt die Steuereinheit die Information über die Funktionsfähigkeit der ostseitigen und westseitigen Übertragungsstrecke in zwei Bit eines Link-Vektors ein und überträgt den Link-Vektor an die übrigen Add/Drop-Multiplexer und/oder die Netzwerkmanagement-Steuereinheit. Die Vorgänge des Schreibens/ Lesens des Linkvektors und des Ermittelns der erforderlichen Schaltvorgänge aus dem Linkvektor und den dem Knoten bzw. Add/Drop-Multiplexer bekannten Verkehrsbeziehungen innerhalb des Ringnetzes erfolgen in der Steuereinheit vorzugsweise unmittelbar, d.h. ohne den Einfluss eines Betriebssystems.

Erfindungsgemäß erfolgt der Lese- oder Schreibvorgang des Link-Vektors vorzugsweise zwischen der Schicht 3 und der MAC Schicht 2, wobei die Steuereinheit den Link-vektor in einen proprietären Rahmen zwischen zwei MAC Rahmen einträgt. Hierdurch kann auf einfache Weise die geforderte kurze Reaktionszeit bzw. Umschaltzeit nach dem Auftreten einer Störung gewährleistet werden.

Weitere Ausführungsformen der Erfindung ergeben sich aus den Unteransprüchen.

Die Erfindung wird nachfolgend an der in der Zeichnung dargestellten Figuren näher erläutert. In der Zeichnung zeigen:

Fig. 1    ein schematisches Blockdiagramm eines bidirektionalen Ringnetzes bekannter Struktur mit vier Knoten und voller Punkt-zu-Punkt-Path-Protection und

Fig. 2    ein schematisches Blockdiagramm eines bidirektionalen Ringnetzes nach der Erfindung mit vier Knoten unter Verwendung der Protektion durch optisches Schalten von Wellenlängengruppen.

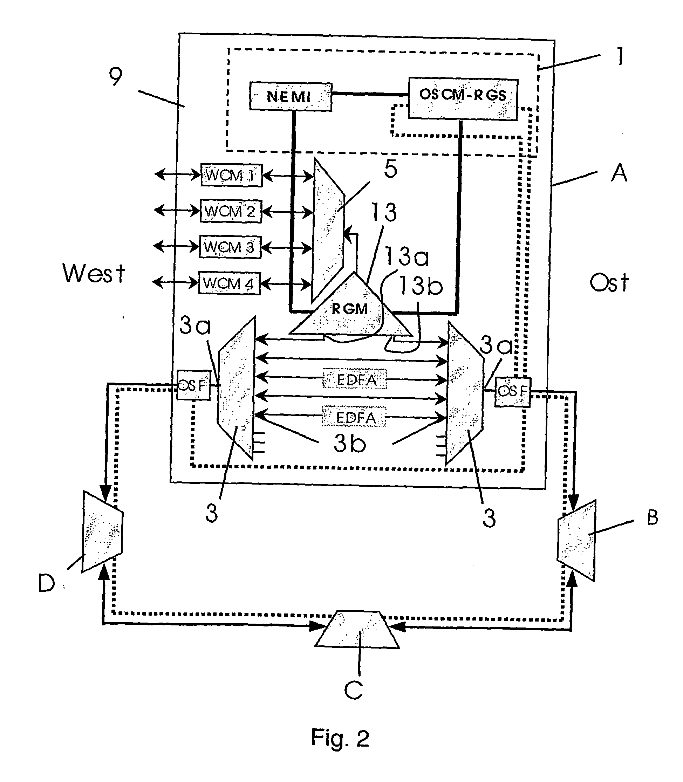

Fig. 2 zeigt schematisch die Verwendung von optischen Gruppenschaltereinheiten zur Protektion der Datenübertragungskanäle in einem WDM-Ringnetz Das Ringnetz weist im dargestellten Ausführungsbeispiel vier Knoten A, B, C und D auf. Jeder Knoten ist durch einen Add/Drop-Multiplixer 9 gebildet, dessen interne Struktur in Fig. 2 am Beispiel des Knotens A dargestellt ist.

Der Add/Drop-Multiplexer 9 umfasst zwei Gruppenfilter oder Wellenlängenmultiplexer/Demultiplexereinheiten 3, deren Multiplexports 3a jeweils über eine Überwachungskanalfiltereinheit OSF mit dem westseitigen bzw. ostseitigen Link des Übertragungsmedium verbunden sind. Als Übertragungsmedium dienen ein bzw. zwei Lichtwellenleiter, vorzugsweise Einmodenfasern, je nach dem ob der Datenverkehr unidirektional über jeweils einen Lichtwellenleiter oder bidirektional über einen einzigen Lichtwellenleiter läuft. Die Überwachungskanalfiltereinheiten OSF filtern aus dem jeweils empfangenen Multiplexsignal, welches auch die einzelnen optischen Nutzkanäle beinhaltet, die Wellenlänge des Überwachungskanal heraus und führen dieses Empfangssignal des Überwachungskanals einem Überwachungskanalmodul OSCM-RGS zu. Das Überwachungskanalmodul OSCM-RGS ist Bestandteil der Steuereinheit 1 des Add/Drop-Multiplexers 9, welche auch die Netzwerkmanagementsteuereinheit NEMI umfasst. Das Überwachungskanalmodul OSCM-RGS führt das Sendesignal des Überwachungskanals den Überwachungskanalfiltereinheiten OSF zu, die dieses Sendesignal in den ost- bzw. westseitigen Link bzw. Lichtwellenleiter einkoppeln. Hierzu verfügt das Überwachungskanalmodul über zwei Transceiverkarten bzw. Überwachungskanalkarten. Der eigentliche Kern des Überwachungskanalmoduls OSCM-RGS ist vorzugsweise als FPGA (Field Programmable Gate Array) realisiert, so dass die Aktionen des OSCM-RGS sehr schnell erfolgen und nicht durch ein relativ langsam reagierendes Betriebssystem gebremst ablaufen.

Jeder Link zwischen zwei Knoten wird also in jeder Richtung durch das optische Überwachungskanalsignal der betreffenden Transceiverkarte beaufschlagt, so dass der jeweils benachbarte Knoten anhand des Signals des Überwachungskanals feststellen kann, ob der Link funktionsfähig ist oder nicht. Wie bereits erläutert, kann dies durch das Detektieren des "Loss of Light" (LOL) oder "Loss of Clock" (LOC) erfolgen.

An den Gruppen-Multiplexsignalports 3b der Wellenlängenmultiplexer/Demultiplexereinheiten 3 liegen die gedemultiplexten Gruppen-Multiplexsignale an. Diese werden entweder direkt oder über optische Verstärker EDFA zu den betreffenden Gruppen-Multiplexsignalports 3b der jeweils anderen Wellenlängenmultiplexer/-Demultiplexereinheiten 3 durchgeschleift. Lediglich diejenigen Gruppen-Multiplexsignale, die zur Terminierung im betreffenden Add/Drop-Multiplexer bestimmt sind, werden jeweils einem geschalteten Port 13a bzw. 13b jeweils einer Gruppenschalteinheit 13 zugeführt. Bei dem in Fig. 2 dargestellten Ausführungsbeispiel wird lediglich eine einzige Wellenlängengruppe im Add/Drop-Multiplexer 9 des Knotens A terminiert.

Das empfangene Gruppen-Multiplexsignal wird von der Gruppenschalteinheit 13 (RGSM) dem Multiplexport einer Kanalfiltereinheit 5 zugeführt, die die einzelnen, im dargestellten Beispiel vier, optischen Kanäle des Gruppen-Multiplexsignals trennt und jeweils einer Transceiver- oder Kanalkarte WCM1 bis WCM4 zuführt.

In umgekehrter Weise werden die jeweils von den Kanalkarten WCM1 bis WCM4 gesendeten optischen Signale von der Kanalfiltereinheit zu einem optischen Gruppen-Multiplexsignal zusammengefasst und der Gruppenschalteinheit 13 zugeführt. Diese führt das Gruppen-Multiplexsignal dann entweder der ostseitigen oder westseitigen Wellenlängenmultiplexer/Demultiplexereinheit 3 zu.

Die Filtereinheiten 3, 5 und OSF können als rein passive optische Koppler, beispielsweise AWG's, realisiert sein. Die Gruppenschalteinheit 13 kann neben einem steuerbaren optischen 1x2-Schalter auch eine Einheit zur Ermittlung des erforderlichen Schalterzustands umfassen. Hierzu erhält die Gruppenschalteinheit 13 vom Überwachungskanalmodul OSCM-RGS der Steuereinheit 1 die Information, welchen Zustand die einzelnen Links des Ringnetzes aufweisen, und von der Netzwerkmanagementeinheit NEMI die Information, welche Verkehrsbeziehungen innerhalb des Ringnetzes tatsächlich zu realisieren sind. Hieraus kann dann innerhalb der Gruppenschalteinheit ermittelt werden, welcher Schaltzustand eingenommen werden muss. Dabei werden der Empfangs- und Sendeweg immer gleichzeitig geschaltet.

Das logische Konzept der Verwendung von Gruppenschalteinheiten basiert auf der optischen Umschaltung individueller Verkehrsbeziehungen eines optischen Ringnetzes. Jede Verkehrbeziehung hat dabei ein eigenes - von der Wegeführung im Ring abhängiges - Schaltkriterium. Im Folgenden sollen diese Schaltkriterien sowie der Einfluss von Umschaltungen auf die Verkehrsführung im Ring generisch definiert werden. Die Anzahl der Ringknoten N kann dabei prinzipiell von 2 bis beliebig hoch skalieren. In der Praxis ist N nicht größer als die Anzahl der zur Verfügung stehenden Wellenlängengruppen.

Zur Beschreibung der Schaltzustände und Verkehrsbeziehungen werden die folgenden drei Größen eingeführt: Link-Vektor L, Switch-Matrix S, Traffic-Matrix T.

Ein Ring mit N Knoten besitzt N Lichtwellenleiterbschnitte bzw. Links zwischen den Knoten. Jeder Link kann entweder unterbrechunbgsfrei ("up") oder unterbrochen ("down") sein. Der N-dimensionale Link-Vektor charakterisiert den Zustand der Menge aller Links eines Ringes. Jedes Element des Link Vektors kann den Wert Null für "down" oder den Wert Eins für "up" einnehmen. Der Zustand L = [0;1;1;1] bedeutet z.B., dass die direkte Verbindung zwischen Knoten 1 und 2 ausgefallen ist.

$$\underline{L} = \begin{bmatrix} L_1 \\ \mathrm{M} \\ L_N \end{bmatrix} \qquad mit \qquad L_i = \{0;1\}$$

Physikalisch wird der Link-Vektor über den Überwachungskanal transportiert, der in Fig. 2 punktiert dargestellt ist. Ein einzelner Ringknoten verfügt durch den aus OST bzw. WEST ankommenden Überwachungskanal über den Status des vom Knoten aus gesehen unmittelbar östlichen bzw. unmittelbar westlichen Links. Jeder Knoten kann also zwei Bits des Link-Vektors beschreiben. Diese Funktionalität, den Link-Vektor zu beschreiben und auszuwerten, ist im Überwachungskanalmodul OSCM-RGS implementiert.

Der Überwachungskanal spannt typischerweise mittels Ethernet ein IP-Netz zwischen den Netzknoten auf, das die Netzwerkmanagementeinheiten NEMI aller Knoten miteinander verbindet. Dadurch wird ein zentrales Management des gesamten Netzes von einem "Gateway"-Knoten aus möglich (selbstverständlich kann das zentrale Management auch von einer separaten, mit den Knoten verbundenen Steuereinheit durchgeführt werden). Der Lese- bzw. Schreibvorgang des Link-Vektors findet nicht auf IP Layer 3, sondern bereits zwischen Layer 3 und MAC Layer 2 statt. Der Grund dafür ist, dass nur unterhalb von Layer 3 feste definierte Umschaltzeiten von kleiner als 50 ms realisiert werden können. Der Link-Vektor wird also in einen proprietären Frame zwischen zwei MAC Frames eingeschrieben.

Der zusätzliche Frame enthält außer dem Link-Vektor ein Start- und ein Stop-Bit. Er hat - je nach Knotenanzahl im Ring - also eine Länge von ($N$ + 2) Bits. Die maximale Länge eines MAC Frames (extended format) kann bis zu 65536 Bits betragen. Bei einer Datenrate von 125 MBit/s entspricht das einer Zeit von kleiner 1 ms zwischen zwei Link-Vektoren. Die so erreichte Übertragungsgeschwindigkeit des "Schaltkriteriums Link-Vektor" ist also ausreichend, um auch SDH-Dienste zu schalten.

Die Switch-Matrix S beschreibt und steuert den Zustand aller Gruppenschaltereinheiten im Ring. Die Switch-Matrix ist vom Rang ($N \times N$). Die Basis der Switch-Matrix wird von den OST- bzw. WEST-Terminals der Netzknoten aufgespannt. D.h. eine Gruppenschaltereinheit, die eine Verkehrbeziehung zwischen den Knoten 1 und 2 schaltet, wird durch die Elemente $S_{21}$ und $S_{12}$ repräsentiert. Beide Elemente sind stets komplementär. Der Zustand $\{S_{12} = 1; S_{21} = 0\}$ bedeutet z.B., dass sämtlicher Verkehr zwischen den Knoten 1 und 2 vom WEST-Terminal des Knotens 1 über die Knoten 4 und 3 hinweg zum OST-Terminal des Knotens 2 läuft (siehe auch Bild 1). Die Switch-Matrix ergibt sich eindeutig aus dem Link-Vektor. Alle Diagonalelemente sind Null, da die Gruppenschaltereinheiten natürlich stets zwischen verschiedenen Knoten eines Ringes schalten. Die Außerdiagonalelemente haben entweder ober- oder unterhalb der Diagonale den Wert Eins.

$$\underline{\underline{S}} = \begin{bmatrix} & 1_{OST} & 2_{OST} & \Lambda & N_{OST} \\ \hline 1_{WEST} & S_{11} & S_{12} & \Lambda & S_{1N} \\ 2_{WEST} & S_{21} & S_{22} & \Lambda & S_{2N} \\ M & M & M & O & M \\ N_{WEST} & S_{N1} & S_{N2} & \Lambda & S_{NN} \end{bmatrix}$$

mit

$$S_{ij} = 0 \; f\ddot{u}r \; i = j, \quad S_{ij} = L_i \; f\ddot{u}r \; i < j, \quad S_{ji} = \overline{L_i} \; f\ddot{u}r \; i > j$$

Die Information über die zu schaltende Verkehrsbeziehung wird von der Netzwerkmanagementeinheit NEMI geliefert und ist Teil der Konfigurationsdaten des Managements. Durch eine direkte Verbindung zum Überwachungskanalmoldul OSCM-RGS wird der Link-Vektor mit einer fest definierten hohen Zeitauflösung übermittelt. Aus dem Link-Vektor wird in der Gruppenschaltereinheit 13 durch eine einfache Rechenoperation das relevante Schaltbit $S_{ij}$ generiert, das direkt den optischen Schalter ansteuert.

Während die Verbindung zur Netzwerkmanagementeinheit NEMI in der Regel über einen systeminternen Bus und das systeminterne Management-Betriebssystem aufgebaut wird, ist die Verbindung zum OSCM-RGS fest verdrahtet und macht nicht den langsamen Umweg über ein Betriebssystem.

Die Traffic-Matrix T beschreibt den gesamten Verkehr im Ring. Sie hat die gleiche Basis wie die Switch-Matrix. Jeder Eintrag in der Verkehrsmatrix, der von Null verschieden ist, bedeutet, dass - je nach Lage des Eintrags in der Matrix - zwischen zwei Knoten Datenverkehr ausgetauscht wird. Die Verkehrsmatrix wird zunächst vom Management System konfiguriert, d.h. alle Elemente werden in einem ersten Schritt - entsprechend der vorgegebenen Netzwerkkonfiguration - beschrieben:

$$T'_{ij} = T'_{ji} = \left\{ (\lambda - group)_{ij}, (\lambda_x = Applicatio \; n \; A, \lambda_y = Applicatio \; n \; B, ....)_{ij} \right\}$$

Jedes Element enthält dabei Informationen über die für die korrespondierende Verkehrsbeziehung belegte Wellenlängengruppe sowie die genaue Belegung der einzelnen Wellenlängenkanäle mit Applikationen. Solange alle Links eines Ringes unterbrechungsfrei sind (links sind "up"), kann jeder Knoten über zwei unabhängige Routen erreicht werden: entweder von Osten oder von Westen. Die Verkehrsmatrix ist also nicht eindeutig. Erst der Zustand der Switch-Matrix gibt eine eindeutige Verkehrsführung im Ring vor. In einem zweiten Schritt werden also die Elemente der Traffic-Matrix mit denen der Switch-Matrix multipliziert:

$$\underline{\underline{T}} = \begin{bmatrix} & 1_{OST} & 2_{OST} & \Lambda & N_{OST} \\ \hline 1_{WEST} & T_{11} & T_{12} & \Lambda & T_{1N} \\ 2_{WEST} & T_{21} & T_{22} & \Lambda & T_{2N} \\ \Mu & \Mu & \Mu & O & \Mu \\ N_{WEST} & T_{N1} & T_{N2} & \Lambda & T_{NN} \end{bmatrix} \qquad mit \quad T_{ij} = S_{ij} \cdot T_{ij}'$$

Es sind also stets zwei logische Schritte, die die Verkehrsmatrix definieren: Im ersten Schritt erfolgt das Laden der logischen Verkehrsbeziehungen und im zweiten Schritt der Abgleich mit den physikalischen Schalter-Stellungen.

Mittels des Überwachungskanals wird der Link-Vektor an sämtliche Knoten des Ringes transportiert. Im Überwachungskanalmodul OSCM-RGS wird der Link-Vektor von den MAC Frames isoliert und es werden zwei Bits überschrieben, um den Zustand der Links westlich und östlich des Knotens zu aktualisieren. Der so aktualisierte Link-Vektor wird an die Gruppenschaltereinheit weitergegeben. In der Gruppenschaltereinheit wird der Link-Vektor in ein Schaltbit übersetzt. Wenn ein Störfall im Ring auftritt, entscheidet die Gruppenschaltereinheit, ob für die korrespondierende Wellenlängengruppe eine Umschaltung vom OST- zum WEST-Terminal bzw. umgekehrt erfolgen muss. Der optische Schalter der Gruppenschaltereinheit schaltet dabei Sende- und Empfangrichtung parallel. Die Netzwerkmanagementeinheit NEMI liefert dabei einerseits Konfigurationsdaten an das Überwachungskanalmodul OSCM-RGS bzw. die Gruppenschaltereinheit RGS und gleicht andererseits die Traffic-Matrix mit der Switch-Matrix ab. Während Link-Vektor und Switch-Matrix den Verkehr im Ring direkt beeinflussen, ist die Traffic-Matrix ohne Einfluss auf den Verkehr und dient lediglich der Darstellung aller Datenströme im Ring.

**Patentansprüche**

1. Optischer Add/Drop-Multiplexer zur Realisierung eines optischen Wellenlängen-multiplex-Kommunikationsringnetzes

    a) mit einer ersten Westseite, und einer zweiten, Ostseite, optischen Gruppen-Wellenlängenmultiplexer/Demultiplexereinheit, welche jeweils ein ihr zugeführtes Wellenlängenmultiplexsignal in mehrere optische Gruppen-Multiplexsignale demultiplexen und/oder mehrere ihr zugeführte optische Gruppen-Multiplexsignale zu einem abgehenden optischen Wellenmultiplexsignal multiplexen,
    b) wobei ein Teil der optischen Gruppen-Multiplexsignale den Gruppen-Multiplexsignalports der jeweils anderen Wellenlärigenmultiplexer/-Demultiplexereinheit zugeführt sind,
    c) mit wenigstens einer Kanal-Multiplexereinheit, welcher ein optisches Gruppen-Multiplexsignal zuführbar ist und welche dieses in die einzelnen optischen Nutzsignale demultiplext und jeweils einer optischen Transceivereinheit zuführt und welche die von den optischen Transceivereinheiten gesendeten optischen Nutzsignale zu einem optischen Gruppen-Multiplexsignal multiplext,
    d) wobei der Gruppen-Multiplexsignalport der wenigstens einen Kanal-Multiplexereinheit mittels einer optischen Gruppenschaltereinheit entweder mit einem Gruppen-Multiplexsignalport der ersten oder zweiten optischen Gruppen-Wellenlängenmultiplexer/Demultiplexereinheit verbindbar ist,
    e) mit einer Steuereinheit zur Ansteuerung der wenigstens einen optischen Gruppenschaltereinheit und
    f) mit einer ostseitigen und einer westseitigen Überwachungskanalfiltereinheit (OSF), welche jeweils aus dem ostseitigen und westseitigen Wellenlängenmultiplexsignal das Signal eines zur Übertragung von Managementinformationen innerhalb der Ringstruktur dienenden Managementkanals herausfiltert und der Steuereinheit zuführt oder das Signal des Managementkanals von der Steuereinheit dem Wellenlängenmultiplexsignal zuführt.

2. Add/Drop-Multiplexer nach Anspruch 1, **dadurch gekennzeichnet, dass** die Steuereinheit eine Störung der ostseitigen und westseitigen Übertragungsstrecke erfasst und diese Information zur Steuerung der wenigstens einen Gruppenschaltereinheit verwendet.

3. Add/Drop-Multiplexer nach Anspruch 2, **dadurch gekennzeichnet, dass** die Steuereinheit die betreffende Übertragungsstrecke als gestört interpretiert, wenn keinerlei optische Empfangsleistung oder keinerlei Modulation eines optischen Trägersignals detektiert wird.

4. Add/Drop-Multiplexer nach einem der vorhergehenden Ansprüche, **dadurch gekennzeichnet, dass** wenigstens eine Transceivereinheit für den Managementkanal vorgesehen ist.

5. Add/Drop-Multiplexer nach Anspruch 4, **dadurch gekennzeichnet, dass** dem Managementkanal eine separate Wellenlänge zugeordnet ist.

6. Add/Drop-Multiplexer nach Anspruch 5, **dadurch gekennzeichnet, dass** das Signal des Managementkanals jeweils mittels eines separaten optischen Filters aus dem optischen Pfad ausgekoppelt und in diesen eingekoppelt wird, welches mit dem Multiplexport der optischen Gruppen-Wellenlängenmultiplexer/-Demultiplexereinheiten verbunden ist.

7. Add/Drop-Multiplexer nach einem der Ansprüche 4 bis 6, **dadurch gekennzeichnet, dass** das Trägersignal des Managementkanals andauernd an den jeweils benachbarten Add/Drop-Multiplexer übertragen wird.

8. Add/Drop-Multiplexer nach einem der Ansprüche 4 bis 7, **dadurch gekennzeichnet, dass** zwei Transceivereinheiten zur Realisierung eines Managementkanals zwischen dem jeweiligen Add/Drop-Multiplexer und den jeweils ostseitig und westseitig benachbarten Add/Drop-Multiplexern vorgesehen sind.

9. Selbstheilende Ringstruktur für die optische Nachrichtenübertragung im Wellenlängenmultiplex,

    a) bei der jeder Ringknoten von einem Add/Drop-Multiplexer nach einem der vorhergehenden Ansprüche gebildet ist,
    b) wobei jeder Add/Drop-Multiplexer über wenigstens einen Lichtwellenleiter mit jeweils einem ostseitig und einem westseitig benachbarten Add/Drop-Multiplexer verbunden ist.

10. Ringstruktur nach Anspruch 9, **dadurch gekennzeichnet, dass** die Steuereinheit jedes Add/Drop-Multiplexers eine Störung der ostseitigen und westseitigen Übertragungsstrecke erfasst und diese Information direkt oder über eine zentrale Netzwerkmanagement-Steuereinheit an alle jeweils anderen Add/Drop-Multiplexer überträgt und dass die Steuereinheit jedes Add/Drop-Multiplexers diese Informationen zur Steuerung der wenigstens einen Gruppenschaltereinheit verwendet, um vorbestimmte Kommunikationsverbindungen zwischen dem betreffenden Add/Drop-Multiplexer und wenigstens einem weiteren Add/Diop-Multiplexer zu ermöglichen.

11. Ringstruktur nach Anspruch 10, **dadurch gekennzeichnet, dass** die Steuereinheit jedes Add/Drop-Multiplexers mittels des Managementkanals und Internet-Protokoll, IP, mit den Steuereinheiten aller anderen Add/Drop-Multiplexer und/oder der Netzwerkmanagement-Steuereinheit verbunden ist.

12. Ringstruktur nach Anspruch 10 oder 11, **dadurch gekennzeichnet, dass** die Steuereinheit die Information über die Funktionsfähigkeit der ostseitigen und westseitigen Übertragungsstrecke in zwei Bit eines Link-Vektors einträgt und den Link-Vektor an die übrigen Add/Drop-Multiplexers und/oder die Netzwerkmanagement-Steuereinheit überträgt.

13. Ringstruktur nach Anspruch 12, **dadurch gekennzeichnet, dass** der Lese- oder Schreibvorgang des Link-Vektors zwischen der Schicht 3 und der MAC Schicht 2 erfolgt, wobei die Steuereinheit den Linkvektor in einen proprietären Rahmen zwischen zwei MAC Rahmen einträgt.

**Claims**

1. An optical add/drop multiplexer for implementing an optical wavelength-division multiplex communications ring network

    a) with a first, west-side, optical group wavelength-division multiplexer/demultiplexer unit and with a second, east-side, optical group wavelength-division multiplexer/demultiplexer unit, each of which demultiplexes a wavelength-division multiplex signal supplied to it into several optical group-multiplex signals and/or multiplexes several optical group-multiplex signals supplied to it so as to form an outgoing optical wavelength-division multiplex signal,

b) some of the optical group-multiplex signals being supplied to the group-multiplex-signal ports of the respective other wavelength-division multiplexer/demultiplexer unit,

c) with at least one channel-multiplexer unit to which an optical group-multiplex signal is capable of being supplied and which demultiplexes said signal into the individual optical useful signals and supplies the latter to a respective optical transceiver unit and which multiplexes the optical useful signals transmitted from the optical transceiver units so as to form an optical group-multiplex signal,

d) the group-multiplex-signal port of the at least one channel-multiplexer unit being capable of being connected by means of an optical group-switch unit to a group-multiplex-signal port of either the first or the second optical group wavelength-division multiplexer/demultiplexer unit,

e) with a control unit for driving the at least one optical group-switch unit and

f) with an east-side and a west-side supervisory-channel filter unit (OSF), each of which filters out the signal of a management channel serving for the transmission of management information within the ring configuration from the east-side wavelength-division multiplex signal and west-side wavelength-division multiplex signal, respectively, and supplies it to the control unit or supplies the signal of the management channel from the control unit to the wavelength-division multiplex signal.

2. Add/drop multiplexer according to Claim 1, **characterised in that** the control unit registers a fault of the east-side and west-side transmission links and uses this information for the purpose of controlling the at least one group-switch unit.

3. Add/drop multiplexer according to Claim 2, **characterised in that** the control unit interprets the transmission link in question as being faulty if no optical received power whatsoever or no modulation whatsoever of an optical carrier signal is detected.

4. Add/drop multiplexer according to one of the preceding claims, **characterised in that** at least one transceiver unit is provided for the management channel.

5. Add/drop multiplexer according to Claim 4, **characterised in that** a separate wavelength is assigned to the management channel.

6. Add/drop multiplexer according to Claim 5, **characterised in that** the signal of the management channel is coupled out of the optical path and coupled into the latter in each instance by means of a separate optical filter which is connected to the multiplex port of the optical group wavelength-division multiplexer/demultiplexer units.

7. Add/drop multiplexer according to one of Claims 4 to 6, **characterised in that** the carrier signal of the management channel is constantly transmitted to the respectively adjacent add/drop multiplexer.

8. Add/drop multiplexer according to one of Claims 4 to 7, **characterised in that** two transceiver units for implementing a management channel between the respective add/drop multiplexer and the respectively east-side and west-side adjacent add/drop multiplexers are provided.

9. A self-healing ring configuration for optical message transmission using wavelength-division multiplexing,

a) wherein each ring node is constituted by an add/drop multiplexer according to one of the preceding claims,

b) each add/drop multiplexer being connected to, respectively, an east-side and a west-side adjacent add/drop multiplexer via at least one optical waveguide.

10. Ring configuration according to Claim 9, **characterised in that** the control unit of each add/drop multiplexer registers a fault of the east-side and west-side transmission links and transmits this information to all the respective other add/drop multiplexers directly or via a central network-management control unit and **in that** the control unit of each add/drop multiplexer uses this information for the purpose of controlling the at least one group-switch unit in order to enable predetermined communications links between the add/drop multiplexer in question and at least one further add/drop multiplexer.

11. Ring configuration according to Claim 10, **characterised in that** the control unit of each add/drop multiplexer is connected to the control units of all the other add/drop multiplexers and/or to the network-management control unit by means of the management channel and Internet Protocol.

**12.** Ring configuration according to Claim 10 or 11, **characterised in that** the control unit enters the information about the operational capability of the east-side and west-side transmission links into two bits of a link vector and transmits the link vector to the remaining add/drop multiplexers and/or to the network-management control unit.

**13.** Ring configuration according to Claim 12, **characterised in that** the operation for reading or writing the link vector is carried out between layer 3 and MAC layer 2, whereby the control unit enters the link vector into a proprietary frame between two MAC frames.

**Revendications**

**1.** Multiplexeur optique à insertion/extraction pour réaliser un réseau annulaire de communication optique multiplex à répartition en longueurs d'onde, comprenant :

a) une première (côté ouest) et une seconde (côté est) unité optique de multiplexeur/démultiplexeur à répartition en longueurs d'onde groupées, qui, respectivement, démultiplexent un signal multiplexé en longueurs d'onde qui leur a été transmis en plusieurs signaux optiques multiplexés groupés et/ou qui multiplexent plusieurs signaux optiques multiplexés groupés qui leur ont été transmis en un signal optique multiplexé en longueurs d'onde sortant,

b) dans lequel une partie des signaux optiques multiplexés groupés est transmise aux ports des signaux multiplexés groupés des autres unités respectives de multiplexeur/démultiplexeur à répartition en longueurs d'onde,

c) comprenant au moins une unité de multiplexeur à canal, à laquelle un signal optique multiplexé groupé peut être transmis, qui démultiplexe celui-ci en signaux optiques utiles individuels qu'elle transmet respectivement à une unité optique d'émetteur-récepteur et qui multiplexe les signaux optiques utiles envoyés par les unités optiques d'émetteur-récepteur en un signal optique multiplexé groupé,

d) dans lequel le port de signal multiplexé groupé de la au moins une unité de multiplexeur à canal peut être connecté au moyen d'une unité optique de commutation groupée à un port de signal multiplexé groupé de la première ou de la seconde unité optique de multiplexeur/démultiplexeur à répartition en longueurs d'onde groupées,

e) comprenant une unité de commande pour commander la au moins une unité optique de commutation groupée et

f) comprenant une unité de filtrage à canal de surveillance côté est et côté ouest (OSF) qui sépare respectivement par filgrage du signal multiplexé en longueurs d'onde côté est et côté ouest, le signal d'un canal de gestion servant à transmettre les informations de gestion à l'intérieur de la structure annulaire et le transmet à l'unité de commande ou qui transmet le signal du canal de gestion de l'unité de commande au signal multiplexé en longueurs d'onde.

**2.** Multiplexeur à insertion/extraction selon la revendication 1, **caractérisé en ce que** l'unité de commande détecte une interférence du segment de transmission côté est et côté ouest et utilise cette information pour commander la au moins une unité de commutation groupée.

**3.** Multiplexeur à insertion/extraction selon la revendication 2, **caractérisé en ce que** l'unité de commande interprète le segment de transmission concerné comme brouillé lorsqu'on ne détecte absolument aucune puissance de réception optique ou absolument aucune modulation d'un signal porteur optique.

**4.** Multiplexeur à insertion/extraction selon l'une quelconque des revendications précédentes, **caractérisé en ce que** l'on prévoit au moins une unité d'émetteur-récepteur pour le canal de gestion.

**5.** Multiplexeur à insertion/extraction selon la revendication 4, **caractérisé en ce qu'**une longueur d'onde séparée est affectée au canal de gestion.

**6.** Multiplexeur à insertion/extraction selon la revendication 5, **caractérisé en ce que** le signal du canal de gestion est respectivement extrait du bus optique et injecté dans celui-ci au moyen d'un filtre optique séparé, qui est connecté au port multiplex des unités optiques de multiplexeur/démultiplexeur à répartition en longueurs d'onde groupées.

**7.** Multiplexeur à insertion/extraction selon l'une quelconque des revendications 4 à 6, **caractérisé en ce que** le signal porteur du canal de gestion est transmis en permanence au multiplexeur à insertion/extraction respectivement voisin.

8. Multiplexeur à insertion/extraction selon l'une quelconque des revendications 4 à 7, **caractérisé en ce que** deux unités d'émetteur-récepteur sont prévues pour créer un canal de gestion entre le multiplexeur à insertion/extraction respectif et les multiplexeurs à insertion/extraction respectivement voisins côté est et côté ouest.

9. Structure annulaire autorégénératrice pour la transmission optique d'informations dans le multiplexeur à répartition de longueurs d'onde,

   a) dans laquelle chaque noeud annulaire est constitué d'un multiplexeur à insertion/extraction selon l'une quelconque des revendications précédentes,
   b) dans laquelle chaque multiplexeur à insertion/extraction est connecté via au moins un guide d'ondes optiques à respectivement un multiplexeur à insertion/extraction côté est et à un multiplexeur à insertion/extraction côté ouest.

10. Structure annulaire selon la revendication 9, **caractérisée en ce que** l'unité de commande de chaque multiplexeur à insertion/extraction détecte une interférence du segment de transmission côté est et côté ouest et transmet cette information, directement ou via une unité de commande centrale de gestion du réseau, à tous les autres multiplexeurs à insertion/extraction respectifs et **en ce que** l'unité de commande de chaque multiplexeur à insertion/extraction utilise ces informations pour commander la au moins une unité de commutation groupée pour permettre des connexions de communication prédéterminées entre le multiplexeur à insertion/extraction concerné et au moins un autre multiplexeur à insertion/extraction.

11. Structure annulaire selon la revendication 10, **caractérisée en ce que** l'unité de commande de chaque multiplexeur à insertion/extraction est connectée, au moyen du canal de gestion et du protocole Internet IP, aux unités de commande de tous les autres multiplexeurs à insertion/extraction et/ou à l'unité de commande de gestion du réseau.

12. Structure annulaire selon la revendication 10 ou 11, **caractérisée en ce que** l'unité de commande encode l'information sur le fonctionnement du segment de transmission côté est et côté ouest dans deux bits d'un vecteur de liaison et **en ce qu'**elle transmet le vecteur de liaison aux autres multiplexeurs à insertion/extraction et/ou à l'unité de commande de gestion du réseau.

13. Structure annulaire selon la revendication 12, **caractérisée en ce que** l'opération de lecture ou d'écriture du vecteur de liaison se fait entre la couche 3 et la couche MAC 2, l'unité de commande insérant le vecteur de liaison dans une trame propriétaire entre deux trames MAC.

Fig. 1

Fig. 2